Europäisches Patentamt

European Patent Office

Office européen des brevets

(19)

(11) Veröffentlichungsnummer: **0 362 680**
**A2**

## (12) EUROPÄISCHE PATENTANMELDUNG

(21) Anmeldenummer: 89117838.6

(22) Anmeldetag: 27.09.89

(51) Int. Cl.5: **F16M 11/04**

(30) Priorität: 03.10.88 CH 3670/88

(43) Veröffentlichungstag der Anmeldung:
**11.04.90 Patentblatt 90/15**

(84) Benannte Vertragsstaaten:
**DE FR GB IT NL SE**

(71) Anmelder: **Hürlimann, Peter**
**Minervastrasse 46**
**CH-8032 Zürich(CH)**

(72) Erfinder: **Hürlimann, Peter**
**Minervastrasse 46**
**CH-8032 Zürich(CH)**

(74) Vertreter: **Blum, Rudolf Emil Ernst et al**
**c/o E. Blum & Co Patentanwälte Vorderberg**
**11**
**CH-8044 Zürich(CH)**

(54) **Teleskopisch aus- und einfahrbarer Arm.**

(57) Der Arm weist ein Halteelement (2) und mehrere, darin angeordnete Teleskopelemente (3 - 7) abnehmenden Durchmessers auf. Das Halte- und die Teleskopelemente sind durch mindestens eine kinematische Kette untereinander verbunden, die durch umgelenkte Zugglieder (8) gebildet ist. Die Zugglieder (8), vorzugsweise Stahlbänder, verbinden jeweils drei aufeinanderfolgende Teleskopelemente (3 - 7). Sie sind an den jeweils äusseren beiden Teleskopelemente befestigt und um das mittlere Element oben und unten umgelenkt. Beim Verschieben des Teleskopelementes (3) grössten Durchmessers relativ zum Halteelement (2) wird jedes weitere Teleskopelement (4 - 7) um eine entsprechende Länge bezüglich seinem äusseren Nachbarelement verschoben. Diese Anordnung ergibt einen steifen, ruckfrei arbeitenden Teleskoparm kleiner Bauhöhe.

EP 0 362 680 A2

# Teleskopisch aus- und einfahrbarer Arm

Die Erfindung betrifft einen teleskopisch aus- und einfahrbaren Arm mit einem Halteelement und mehreren, darin angeordneten Teleskopelementen abnehmenden Durchmessers.

Teleskoparme dieser Art finden in der Technik vielfache Anwendung, etwa als ausfahrbare Stativsäulen oder als Tragteile oder Arme für Industrieroboter und dergleichen.

Dabei stellt sich das Problem, dass zugleich mehrere, sich gegenseitig behindernde Eigenschaften gefordert werden, nämlich: grosse Tragkraft in beiden Richtungen längs des Arms, ruckfreies und reproduzierbares Aus- und Einfahren, Aufnahme exzentrisch angreifender Lasten, grosser Hub bei kleiner Bauhöhe in eingefahrenem Zustand, geringes Eigengewicht, hohe Steifigkeit sowie für spezielle Anwendungen, wie z.B. Kamerastative: geräuscharme Arbeitsweise.

Bisher bekannt gewordene Teleskoparme wurden diesen Anforderungen nur teilweise gerecht. Es stellt sich deshalb die Aufgabe, einen Teleskoparm der eingangs genannten Art so auszugestalten, dass die erläuterten Anforderungen gleichermassen erfüllt werden. Die Lösung dieser Aufgabe ergibt sich aus Patentanspruch 1.

Das eine kinematische Kette bildende System von umlaufenden Zuggliedern erlaubt ein ruckfreies Aus und Einfahren des Arms bei Aufnahme von in beiden Richtugnen des Arms verlaufenden Kräften, sowie die Aufnahme exzentrisch angreifender Lasten. Vorzugsweise ist die Vorspannkraft der Zugglieder bzw. Bänder einstellbar, so dass ein spielfreies und reproduzierbares Aus-und Einfahren gewährleistet ist.

Wird der Arm gemäss einem bevorzugten Ausführungsbeispiel als linear aus- und einfahrbares Teleskoprohr ausgebildet, so reicht es aus, wenn zwischen dem Halteelement und dem Teleskopelement grössten Durchmessers oder zwischen zwei beliebigen aneinander angrenzenden Teleskopelementen eine lineare Führung vorgesehen ist. Weitere Führugnen zwischen den Teleskopfelementen sind nicht nötig, da ihre gegenseitige Lage dann durch das Bandsystem festgelegt ist.

Der erfindungsgemäss ausgebildete Arm kann bei geeigneter Ausgestaltung in eine längs einem Bogenverlaufende Lage gebracht werden. Dies insbesondere dadurch, dass das Teleskopelement grössten Durchmessers gegenüber dem Halteelement mittels geeigneten Antrieben in eine Winkelstellung gebracht wird. Diese Winkelstellung wird über das Zuggliedsystem auf die Teleskopelemente übertragen, welche ebenfalls gegeneinander abgewinkelt werden. Auf diese Weise wird ein universell bewegbarer Arm, z.B. für einen Industrieroboter, erzielt, der sowohl lineare als auch Schwenkbewegungen ausführen kann.

Nachfolgend wird ein Ausführungsbeispiel der Erfindung anhand der beiliegenden Zeichnung näher beschrieben. Darin zeigen:

Fig. 1 einen Arm ohne den Antrieb in perspektivischer Ansicht, in der Längsachse geschnitten;

Fig. 2 eine Schnittansicht eines 90° - Ausschnittes dieses Arms, mit etwas abgewandelter Längsführung;

Fig. 3 eine perspektivische Ansicht des Antriebsteils im Arminnern, wobei die Teleskopelemente teilweise weggeschnitten gezeigt sind;

Fig. 4 ein Schema einer ersten Lastausgleichseinrichtung für den Arm, und

Fig. 5 ein Schema einer abgewandelten Lastausgleichseinrichtung für den Arm.

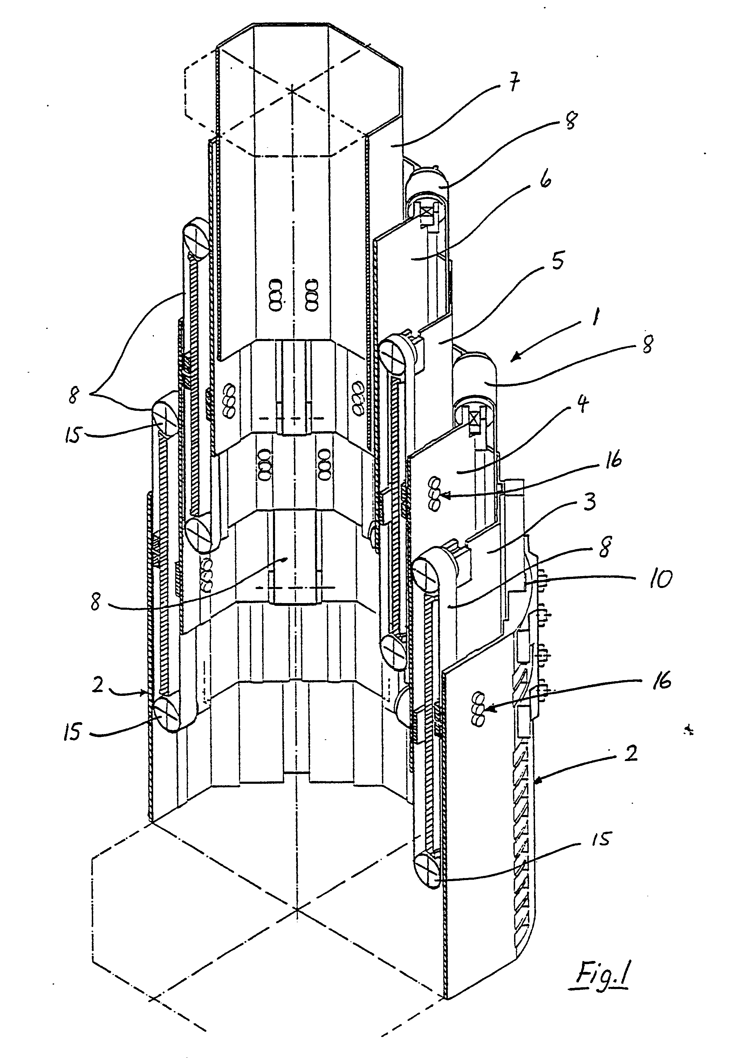

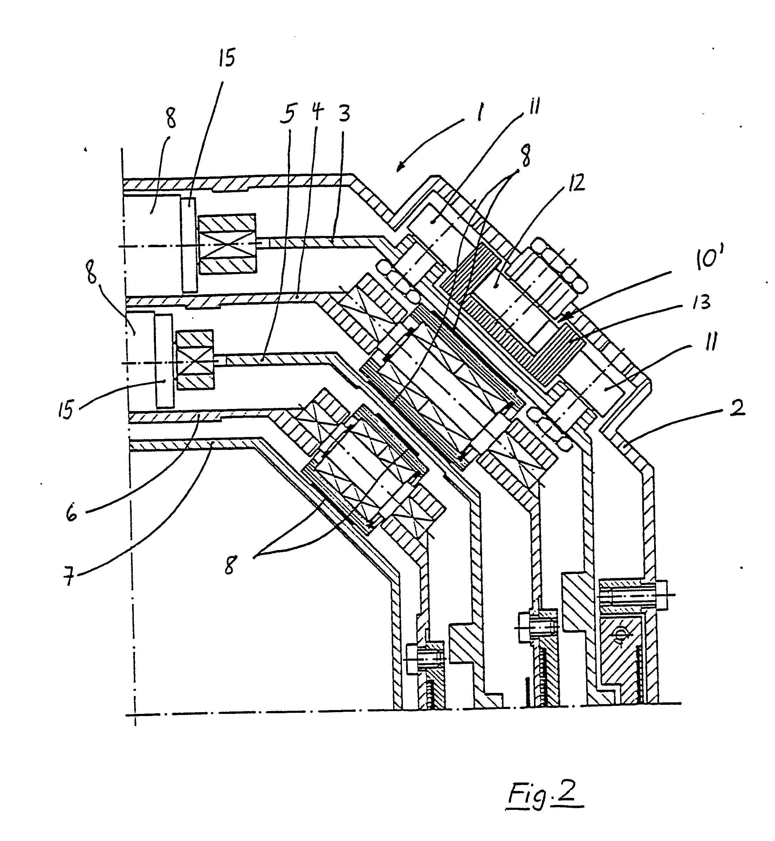

In den Fig. 1 und 2 ist der grundsätzliche Aufbau der kinematischen Ketten zwischen den Teleskopelementen gezeigt, welche sowohl die Kraft als auch die Bewegungsübertragung zwischen den Elementen sicherstellen. Der hier dargestellte Teleskoparm 1 ist aus einem Halteelement 2 sowie fünf Teleskopelementen 3 bis 7 mit abnehmenden Durchmessern zusammengesetzt. Die Zahl der Teleskopelemente ist dabei natürlich nicht grundsätzlich auf fünf beschränkt.

Im gezeigten Ausführungsbeispiel sind die Teleskopelemente 3 bis 7 und das Halteelement 2 als Profilrohre mit achteckigem Querschnitt ausgebildet. Die Profilrohre sind vorzugsweise aus Aluminium oder verstärktem Kunststoff. Längs den ebenen Seiten dieser Profilrohre verlaufen als Zugglieder Bänder 8, die die Teleskopelemente untereinander verbinden. Jedes Band 8 ist so angeordnet, dass es um eine Teleskopelement, z.B. das Teleskopelement 5, umläuft und an den jeweils angrenzenden Teleskopelementen, den Teleskopelementen 4 und 6, befestigt ist. Die Befestigung am äusseren Teleskopelememt liegt jeweils in dessen oberem Bereich, während die Befestigung am inneren Teleskopelement unten liegt. Eine kinematische Kette wird nun durch ein System solcher umlaufender Bänder 8 ausgebildet, die längs des ganzen Teleskoparms jeweils immer die drei aufeinanderfolgenden Teleskopelemente in der erwähnten Weise untereinander verbinden. Eine solche kinematische Kette ergibt sich z.B. aus den in Fig. 1 auf der rechten Seite ersichtlichen, versetzt angeordneten Bändern 8.

Längs einer solchen kinematischen Kette sind die Teleskopelemente so verbunden, dass sich bei einer Verschiebung des Teleskopelementes 3 grössten Durchmessers jedes der Teleskopelemente 4 bis 7 zwangsweise relativ zum aussenliegenden Nachbarelement um dieselbe Strecke verschiebt.

Im gezeigten Ausführungsbeispiel bilden die Bänder 8 zweier aneinandergrenzender Seiten der Teleskopelemente jeweils eine solche kinematische Kette. Bei acht Seiten des Profilrohres ergeben sich deshalb insgesamt vier solche, um den Umfang verteilte kinematische Ketten. Es sei jedoch hervorgehoben, dass auch schon eine kleinere Anzahl z.B. drei solcher kinematischer Ketten ein stabiles System bilden.

Soll der Arm nun, wie im gezeigten Ausführungsbeispiel, linear aus- und einfahrbar sein, so reicht es aus, zwischen zwei Elementen des Armes eine Längsführung auszubilden, während die Führung bzw. Halterung der restlichen Elemente allein über das Bandsystem erfolgt, so dass dort nur eine radiale Abstützung notwendig ist. Wie aus den Fig. 1 und 2 ersichtlich ist, ist die Längsführung 10 (Fig. 1) bzw. 10' (Fig. 2) zwischen dem Halteelement 2 und dem Teleskopelement 3 grössten Durchmessers angeordnet. Solche Längsführungen 10 und 10' sind herkömmlich aufgebaut und weisen Rollen 11 und 12 auf, die sich auf einem Längsprofil 13 abstützen, wie in Fig. 2 ersichtlich ist. Längsführungen dieser Art sind an jeder zweiten Seite des Profilquerschnittes angeordnet. Die durch die Längsführungen 10 bzw. 10' linear geführte Bewegung zwischen dem Teleskopelement 3 grössten Durchmessers und dem Halteelement 2 überträgt sich durch das Bandsystem, wie ausgeführt, zwangsweise auf alle nachfolgenden Teleskopelemente.

Die Längsführung kann auch durch einen als Führung wirkenden Antrieb zwischen dem Halteelement 2 und dem Teleskopelement 3 grössten Durchmessers erreicht werden, z.B. durch drei synchron angetriebene Spindeltriebe, welche das erwähnte Teleskopelement 3 exakt linear zum Halteelement 2 verschieben. Um den Teleskoparm 1 in jeder Ausfahrstellung eine möglichst grosse Starrheit zu verleihen, sind die Bänder 8 steif, jedoch biegbar ausgebildet. Vorzugsweise werden hierzu Stahlbänder verwendet, die aus mehreren, miteinander nur an den Enden verbundenen Schichten zusammengesetzt sind. Die Bänder 8 sind z.B. aus sechs Schichten Federstahl mit je einer Dicke von 0.1 mm aufgebaut. Damit ergeben sich in Längsrichtung steife, jedoch um Rollen 15 mit relativ kleinem Durchmesser von z.B. 30 mm umlenkbar umlaufende Bänder 8, mittels welchen die Teleskopelemente 3 bis 7 untereinander verbunden sind. Insbesondere im Bereich der Umlenkstellen verschieben sich Schichten der Bänder 8 beim Aus- bzw. Einfahren des Arms 1 aufeinander, was zu einer Dämpfung der Schwingungsübertragung zwischen den einzelnen Teleskopelementen beiträgt. Für Anwendungen, bei denen eine geringe Reibung beim Aus- und Einfahren erzielt werden soll, können die Stahlschichten mit einem Teflonbelag versehen sein, der die Reibung bei der Umlenkung der Bänder 8 herabsetzt.

Eine weitere Massnahme zur Erzielung hoher Steifigkeit und Spielfreihiet des Arms 1 besteht darin, dass die umlaufenden Bänder 8 eine Vorspannung erhalten. Dazu ist jedes Band 8 mindestens bei seiner Befestigung 16 am jeweils äusseren Teleskopelement geteilt und seine Enden sind gegeneinander verschiebbar in der Befestigung 16 gehalten. Die Befestigung 16 ist in ausgefahrenem Zustand des Arms 1 von aussen zugänglich (vgl. Fig. 1), was die Montage der Bänder 8 und die Einstellung von deren Vorspannung gestattet.

Wie sich aus den Fig. 1 und 2 ergibt, sind die Bänder 8 einer kinematischen Kette längs des Arms 1 abwechselnd gegeneinander versetzt angeordnet. Damit und dank des relativ geringen Durchmessers der Umlenkrollen 15 kann der seitliche Abstand zwischen den Teleskopelementen 2 bis 7 bzw. die Abnahme ihrer Durchmesser relativ klein gehalten werden, was wiederum die Steifigkeit des Arms erhöht und es gestattet, im Innenraum des Arms ausreichenden Platz für einen Antrieb zum Aus- und Einfahrens des Arms 1 zu erhalten.

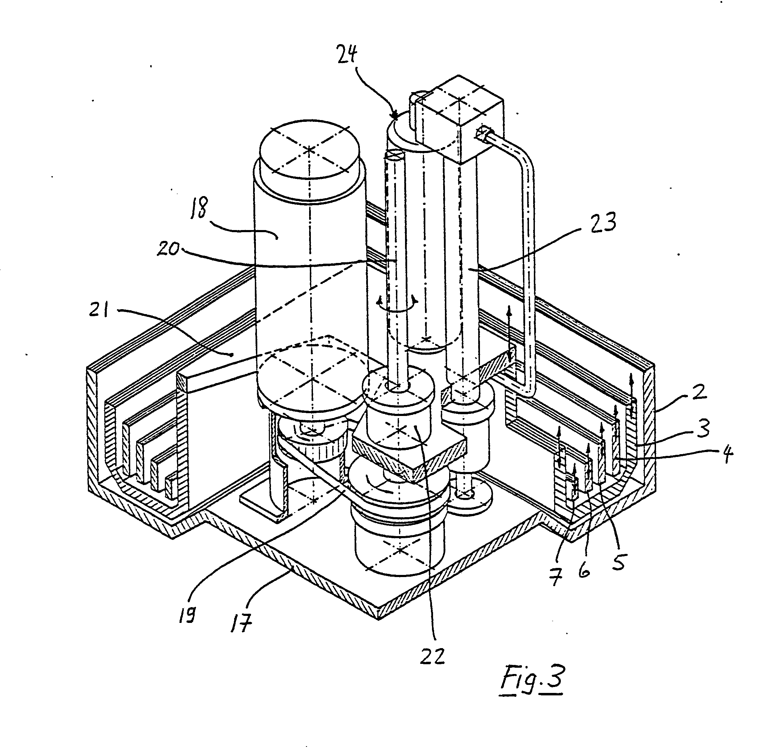

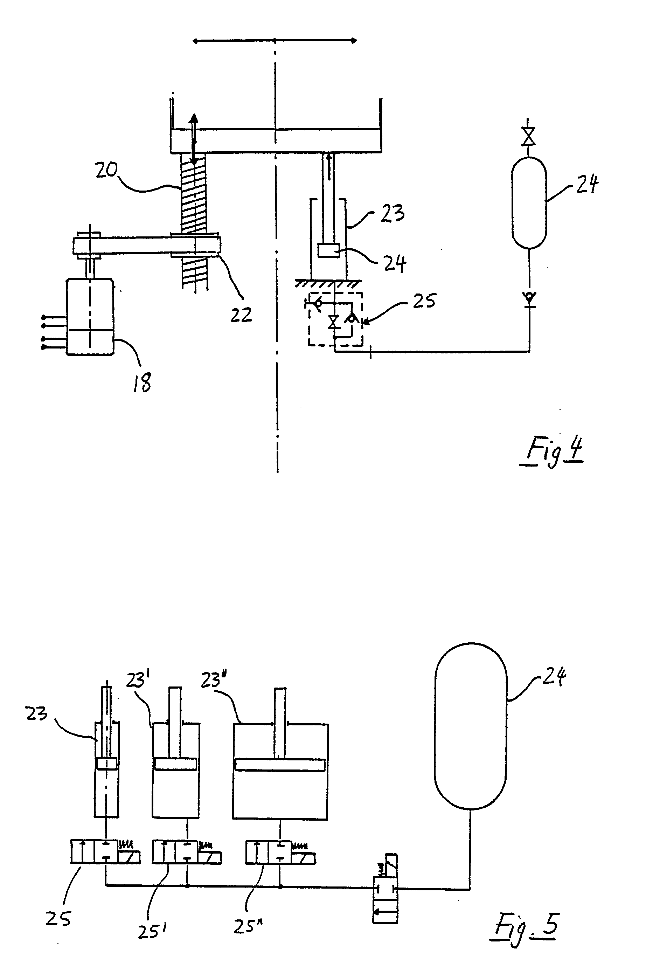

In den Fig. 3 und 4 ist ein solcher Antrieb, wie er im vorliegenden Ausführungsbeipsiel verwendet wird, näher dargestellt. In Fig. 2 sind die unteren Enden des Halteelementes 2 und der eingefahrenen Teleskopelemente 3 bis 7 ersichtlich. Das Halteelement 2 bildet einen Boden 17, auf welchem die Antriebsaggregate befestigt sind, nämlich ein Elektromotor 18, der über einen Riemen 19 eine zentral angeordnete Spindel 20 antreibt. Das Teleskopelement 3 mit dem grössten Durchmesser ist nun so ausgebildet, dass es sich unter den restlichen Teleskopelementen 4 bis 7 hindurch nach innen erstreckt und dort mit einer Tragplatte 21 verbunden ist. Auf dieser Tragplatte 21 ist eine Spindelmutter 22 befestigt, welche auf der Spindel 20 läuft. Durch diesen Spindelantrieb wird die Tragplatte 21 und damit das Teleskopelement 3 grössten Durchmessers gegen das Halteelement 2 verschoben, wodurch über die Bänder 8 die restlichen Teleskopelemente 4 bis 7 ebenfalls in der bereits beschriebenen Weise verschoben werden.

Wird der Arm 1 als lasttragende und hebende Säule ausgebildet, so kann ebenfalls im Säuleninnern eine Lastausgleichseinrichtung vorgesehen sein, durch welche ein Teil der auf den Arm wirkenden Last aufgenommen wird. Der Antrieb hat damit nur eine reduzierte Last aufzunehmen, so dass er kleiner ausgestaltet sein kann. Zudem kann beim Senken teilweise Hubenergie zurückgewonnen werden. In den Fig. 3 und 4 ist eine hydropneumatische Lastausgleichseinrichtung dargestellt, die bei jedemAusfahrzustand des Arms bzw. der Säule 1 eine nahezu konstante Last aufnimmt. Hierzu ist ein hydraulischer Zylinder 23 auf der Tragplatte 21 angeordnet, in den von unten ein Kolben 25 hineinragt, der am Boden 17 abgestützt ist (vgl. Fig. 3; Fig. 3 ist lediglich eine schematische Darstellung). Der Zylinder 23 ist über Ventile 25 mit einem hydropneumatischen Druckspeicher 24 verbunden, der ebenfalls auf der Tragplatte 21 angeordnet ist. Als Druckspeicher 24 kann ein sog. Gas-Oel-Blasendruckspeicher verwendet werden. Dabei kann mit kleinem Speichervolumen ein relativ hoher Druck vom 200-340 bar aufrecht erhalten werden.

Um den Lastausgleich wechselnden Lasten anpassen zu können, ist bei einem Ausführungsbeispiel gemäss der Fig. 5 weiter vorgesehen, mehrere Zylinder 23, 23', 23" mit unterschiedlichen Durchmessern über Ventile 25,25',25" an den Druckspeicher 24 an- und abschaltbar anzuschliessen. Durch wahlweises Zusammenschalten der drei Zylinder, deren Querschnitte vorzugsweise im Verhältnis 1:2:4 stehen, lassen sich sieben verschiedene Lastausgleichswerte erzielen und der jeweiligen Last anpassen. Die entsprechende Steuerung kann über eine Gewichtsmesszelle (nicht gezeigt) automatisch erfolgen. Für die drei Zylinder ist dabei nur ein Druckspeicher 29 notwendig.

Der beschriebene, erfindungsgemässe Aufbau des teleskopischen Arms 1 führt dank der Unterbringung des Antriebs im Innern des eingefahrenen arms zu einer niedrigen Bauhöhe. Da dank dem erläuterten Bandsystem die Teleskopelemente 3 bis 7 über fast ihre gesamte Länge ausfahrbar sind, ergibt sich zudem ein grosser Hub bzw. ein grosser Verstellbereich. Das Bandsystem gewährleistet zudem eine geräuscharme, ruck- und vibrationsfreie, kontinuierliche Verschiebung der Teleskopelemente. Dabei bestehen grundsätzlich keine Beschränkungen der Aus- und Einfahrgeschwindigkeit. Das Bandsystem kann unelastisch und spielfrei ausgebildet sein, was zu einer hohen Steifigkeit des Arms bei relativ leichter und kompakter Bauweise führt. Durch eine Lastausgleichseinrichtung, die ebenfalls im Innern des Arms angeordnet sein kann, lässt sich der Energieverbrauch reduzieren und der Antrieb verkleinern. Die beschriebene Anordnung erlaubt nicht nur die Ausbildung des Arms für Linearverschiebungen, sondern kann durch geeignete Ausgestaltung des Antriebs, z.B. durch drei unabhängige Spindeltriebe zwischen Halteelemente 2 und Teleskopelement 3 grössten Durchmessers, als unviversell bewegbarer, d.h. linear ausfahrbarer und nach allen Richtungen schwenkbarer Arm, ausgestalten. Er eignet sich in dieser Ausgestaltung insbesondere als Roboterarm, während er bei linearer Ausgestaltung z.B. als Teleskopstativ für Kameras oder entsprechende, anspruchsvolle Anwendungen geeignet ist.

**Ansprüche**

1. Teleskopisch aus- und einfahrbarer Arm mit einem Halteelement (2) und mehreren, darin angeordneten Teleskopelementen (3-7) abnehmenden Durchmessers, dadurch gekennzeichnet, dass das Halte- und die Teleskopelemente durch mindestens eine, aus umgelenkten Zuggliedern (8) gebildete kinematische Kette verbunden sind, wobei in jeder kinematischen Kette, ausgehend vom Halteelement (2), jeweils immer drei aufeinanderfolgende Elemente (2 - 7) mittels Zuggliedern (8) verbunden sind, die an den beiden jeweils äusseren Elementen befestigt und um das jeweils mittlre Element oben und unten umgelenkt sind, derart, dass beim Verschieben des Teleskopelementes (3) grössten Durchmessers relativ zum Halteelement (2) jedes weitere Teleskopelement (4 - 7) durch die kinematische Kette um eine entsprechende Länge bezüglich seinem äusseren Nachbarelement verschoben wird.

2. Teleskoparm nach Anspruch 1, dadurch gekennzeichnet, dass die Halte- bzw. die Teleskopelemente (2 - 7) als Profilrohre mit einem Querschnitt ausgebildet sind, der im wesentlichen ein ganzzahliges Vieleck bildet, wobei die Teleskopelemente an jeder zweiten Vieleckseite mit einer unteren und einer oberen Umlenkstelle (15) versehen und so ineinander angeordnet sind, dass die Umlenkstellen (15) jeweils aneinandergrenzender Teleskopelemente an versetzten Vieleckseiten liegen.

3. Teleskoparm nach Anspruch 2, dadurch gekennzeichnet, dass die an zwei benachbarten Vieleckseiten der Teleskopelemente (3 - 7) angeordneten Zugglieder (8) zusammen jeweils eine kinematische Kette bilden.

4. Teleskoparm nach einem der vorangehenden Ansprüche, dadurch gekennzeichnet, dass mindestens drei kinematische Ketten vorgesehen sind.

5. Teleskoparm nach einem der vorangehenden Ansprüche, der als linear aus- und einfahrbares Teleskoprohr ausgebildet ist, dadurch gekennzeichnet, dass zwischen zwei der Halte- bzw. Teleskopelemente eine lineare Führung (10,10') vorgesehen ist.

6. Teleskoparm nach Anspruch 5, dadurch gekennzeichnet, dass die lineare Führung (10,10') zwischen dem Halteelement (2) und dem Teleskopelement (3) grössten Durchmessers vorgesehen ist und die restlichen Teleskopelemente ungeführt sind.

7. Teleskoparm nach einem der vorangehenden Ansprüche, dadurch gekennzeichnet, dass am Halteelement (2) mindestens ein auf das Teleskopelement (3) grössten Durchmessers wirkender linearer Antrieb (18,20,22) vorgesehen ist.

8. Teleskoparm nach Anspruch 7, dadurch gekennzeichnet, dass der lineare Antrieb (18,20,22) als Spindeltrieb (20,22) ausgebildet ist, der im Innern der eingezogenen Teleskopelemente Platz findet.

9. Teleskoparm nach einem der Ansprüche 7 und 8, dadurch gekennzeichnet, dass das an das Halteelement (2) angrenzende Teleskopelement (3) grössten Durchmessers die übrigen Teleskopelemente (4 - 7) an ihrer Unterseite nach innen untergreift und im Innern des Arms mit dem linearen Antrieb (18,20,22) verbunden ist.

10. Teleskoparm nach einem der Ansprüche 6 bis 9, der als lasthebende Säule ausgebildet ist, dadurch gekennzeichnet, dass am Halteelement (2) eine auf das daran angrenzende Teleskopelement (3) grössten Durchmessers wirkende Lastausgleichsvorrichtung (23,24) vorgesehen ist, mittels welcher mindestens ein Teil der auf das Teleskopelement wirkenden Last aufnehmbar ist.

11. Teleskoparm nach Anspruch 10, dadurch gekennzeichnet, dass die Lastausgleichsvorrichtung (23,24) als hydropneumatische Anordnung ausgebildet ist, mit mindestens einem Hydraulikzylinder (23), der im Innern der Teleskopelemente angeordnet ist und einem Druckspeicher (24).

12. Teleskoparm nach Anspruch 11, dadurch gekennzeichnet, dass mehrere Hydraulikzylinder (23,23$'$,23$''$) vorgesehen sind, die wahlweise mit dem Druckspeicher (24) verbindbar, bzw. davon abschaltbar sind.

13. Teleskoparm nach einem der vorangehenden Ansprüche 1 bis 4, dadurch gekennzeichnet, dass am Halteelement (2) mehrere auf das Teleskopelement (3) grössten Durchmessers wirkende, unabhängige Antriebe vorgesehen sind, mittels welchen dieses Teleskopelement (3) in eine definierte Winkelstellung zum Halteelement bringbar ist und dass die Teleskopelemente gegeneinander abwinkelbar sind, derart, dass der Teleskoparm durch geeignete Steuerung der Antriebe in eine definierte, längs einem Bogen verlaufende Lage bringbar ist.

14. Teleskoparm nach einem der vorangehenden Ansprüche, dadurch gekennzeichnet, dass Zugglieder (8) als Stahlbänder ausgebildet sind.

15. Teleskoparm nach Anspruch 14, dadurch gekennzeichnet, dass die Stahlbänder (8) aus mehreren, gegenseitig nicht verbundenen Schichten zusammengesetzt sind.

16. Teleskoparm nach einem der vorangehenden Ansprüche, dadurch gekennzeichnet, dass für jedes der umlaufenden Zugglieder bzw. Bänder (8) eine Vorspannkraft einstellbar ist.

EP 0 362 680 A2

Fig.1

*Fig.2*

_Fig. 3_

EP 0 362 680 A2

Fig 4

Fig 5